# EUROPEAN PATENT SPECIFICATION

(11) **EP 4 098 713 B1**
(45) Date of publication and mention of the grant of the patent: **12.03.2025**
(21) Application number: 21863989.6
(22) Date of filing: 28.07.2021
(51) Int. Cl.: C09J 11/06, C09J 133/06, C09J 171/02, C08G 65/336

(54) **ADHESIVE COMPOSITION AND BONDED STRUCTURE**
KLEBSTOFFZUSAMMENSETZUNG UND VERBUNDENE STRUKTUR
COMPOSITION ADHÉSIVE ET STRUCTURE COLLÉE

(30) Priority: 02.09.2020 JP 2020147734
(43) Date of publication of application: 07.12.2022
(73) Proprietor: Sunstar Engineering Inc., Osaka 569-1134 (JP)
(72) Inventor: SAKANE, Daichiro, Takatsuki-shi, Osaka 569-1134 (JP); YANAGISAWA, Shohei, Takatsuki-shi, Osaka 569-1134 (JP)
(74) Representative: TBK
(86) International application number: PCT/JP2021/027831
(87) International publication number: WO 2022/049931

(56) References cited:
- WO-A1-2014/024963
- WO-A1-2014/024963
- WO-A1-2014/157247
- WO-A1-2014/157247
- WO-A1-2017/099154
- JP-A- 2007 269 935
- JP-A- 2007 269 935
- JP-A- 2012 056 976
- JP-A- 2012 102 154
- JP-A- 2013 241 578
- JP-A- 2013 241 578
- JP-A- 2014 088 481
- JP-A- 2014 088 481
- JP-A- 2017 214 541

## Description

### [Technical Field]

The present disclosure relates to a use of an adhesive composition for preparing a bonded structure. In particular, the present disclosure relates to a use of an adhesive composition and a bonded structure that can be used in environments that require excellent hot/cold thermal shock resistance, such as automotive environments.

### [Background Art]

Conventionally, double-sided tapes were used for laminating display cover glass and resin panels. In recent years, adhesives that can be applied automatically or in narrow widths have been increasingly replacing such tapes in terms of workability. In patent document 1, (A) crosslinkable silicon group-containing organic polymer, (B) a titanium catalyst formed by reacting silane coupling agent B1 with organotitanium compound B2, (C) a silane coupling agent having an ureido group.

### [Prior Art Document]

### Patent Document

[Patent Document 1] JP2016-210879A
[Patent Document 2] JP2013-241578A
[Patent Document 3] JP2007-269935A
[Patent Document 4] WO2014-024963A1
[Patent Document 5] JP2014-088481A
[Patent Document 6] WO2014-157247A1

Patent Document 2 discloses an adhesive composition comprising a moisture-curable modified silicone resin comprising an alkyl(meth)acrylate type polymer with a hydrolyzable silyl group and an oxyalkylene polymer with a hydrolyzable silyl group being added by a resin composition containing a chlorinated polyolefinic resin. A hydrolyzable silane with a phenyl group as an organic group and further a hydrolyzable silane with an amino group as an organic group may be added to the composition described above.

Patent Document 3 discloses a curable composition comprising: (B) an organic polymer that contains an average of 0.5 to 1.5 crosslinkable silyl group in one molecule and whose main chain is not polysiloxane; (C) a silane compound formed by reacting a specific epoxysilane compound with a specific aminosilane compound, in a range of 1.5 to 10 mol of the epoxysilane compound based on 1 mol of the aminosilane compound and at reaction temperature of 40 to 100°C; and (D) a curing catalyst.

Patent Document 4 discloses a curable composition containing an organic polymer (I) that has a silicon-containing group that can be crosslinked by forming a siloxane bond. This curable composition is characterized by containing, as the component (I), a (meth)acrylic acid ester polymer (A) that has a number average molecular weight of 1,000-10,000 and has an average of 0.5-1.5 silicon-containing groups per molecule, that can be crosslinked by forming a siloxane bond and a polyoxyalkylene polymer (B) that has a silicon-containing group that can be crosslinked by forming a siloxane bond. This curable composition is also characterized in that the weight percentage of the component (A) relative to the total weight of the component (I) in the curable composition is 51-99% by weight.

Patent Document 5 discloses a curable composition and its cured product, containing (A) a polyoxyalkylene-based polymer (a1) and/or vinyl-based polymer (a2) having at least one reactive silicon group and a linear structure as a main chain of 100 pts.wt., (B) a compound having a silanol group in a molecule (b1) and/or a compound capable of producing a compound having one silanol group in a molecule by reacting with water (b2) of 0.1 to 10 pts.wt., (C) an organic tin compound of 0.1 to 10 pts.wt. and (D) an amino group-containing silane coupling agent of 0.1 to 10 pts.wt.

Patent Document 6 discloses a curable composition comprising: 100 parts by weight of a polyoxyalkylene-type polymer (A) having a trimethoxysilyl group; 10 to 100 parts by weight of a (meth)acrylate-type polymer (B) having a hydrolysable silyl group and containing a copolymer of ethyl (meth)acrylate and n-butyl (meth)acrylate or a copolymer of methyl (meth)acrylate and n-butyl (meth)acrylate in the main chain backbone; and a dioctyltin compound.

### [Summary of Invention]

### [Technical Problem]

With the recent trend toward larger and more irregularly shaped displays (e.g., curved displays) and narrower bezels, the lamination of display cover glass and resin panels requires not only fine and high-speed application, but also high shape retention (properties that do not spread after application) of adhesive for good workability. In addition, excellent hot/cold thermal shock resistance is required, especially in harsh environments such as in-vehicle environments.

### [Solution to Problem]

This disclosure attempts to solve the above problem. One aspect of the present disclosure is as follows:
[Item 1] Use of an adhesive composition for preparing a bonded structure,
   wherein the bonded structure comprises
   glass,
   resin, and
   cured product of the adhesive composition between the glass and the resin, wherein the adhesive composition comprises
   a poly(meth)acrylic polymer (A), having a reactive silyl group,
   an oxyalkylene polymer (B), having a reactive silyl group at the end, and
   a silane coupling agent (C),
   wherein the silane coupling agent (C) comprises a secondary amino group-containing silane coupling agent (C-i); and
   wherein at least one of (1) - (3) is met:
      (1) the resin is a polycarbonate-containing resin,
      (2) the glass is a cover glass for a display 14 inches or larger or for a display having a curved surface or curved cross section,
         wherein the resin is a resin panel, and
         wherein the bonded structure is a display,
      (3) the bonded structure is an in-vehicle display.
[Item 2] The use according to item 1,
   wherein the polymer (A) has
   a repeating unit derived from a (meth)acrylic monomer represented by (a1) Formula: CH₂=CX¹-C(=O)-O-A¹
   [In the formula, X¹ is a hydrogen atom or a methyl group, and A¹ is a hydrogen atom or a hydrocarbon group having 1 to 9 carbons], and
   a repeating unit derived from a (meth)acrylic monomer represented by (a2) Formula: CH₂=CX²-C (=O)-O-A²
   [In the formula, X² is a hydrogen atom or a methyl group, and A² is a hydrocarbon group having 10 to 40 carbons].
[Item 3] The use according to item 1 or 2,
   wherein the polymer (B) is a combination of a branched polymer and a linear polymer,
   wherein the number average molecular weight of the linear polymer is 1000 to 10000, and
   wherein the amount of the linear polymer is from 3 to 50wt% in the total of polymer (B).
[Item 4] The use according to any one of items 1 to 3,
   wherein the secondary amino group-containing silane coupling agent (C-i) has an OH group or a NH₂ group.
[Item 5] The use according to item 4,
   wherein the secondary amino group-containing silane coupling agent (C-i) has an OH group or a NH₂ group within a distance of 6 atoms from the secondary amino group in the molecule.
[Item 6] The use according to any one of items 1 to 5,
   wherein the secondary amino group-containing silane coupling agent (C-i) is a combination of at least two kinds of secondary amino group-containing silane coupling agent (C-i), at least one of which has an OH group or an NH₂ group.
[Item 7] The use according to item 6,
   wherein the secondary amino group-containing silane coupling agent (C-i) comprises both a silane coupling agent having an OH group in the molecule and a silane coupling agent having an NH₂ group in the molecule.
[Item 8] The use according to any one of items 1 to 7,
   wherein at least one of the secondary amino group-containing silane coupling agent (C-i) has two or more reactive silyl groups in the molecule.
[Item 9] The use according to any one of items 1 to 8,
   wherein the silane coupling agent (C) further comprises at least one selected from the group consisting of a vinyl group-containing silane coupling agent and an epoxy group-containing silane coupling agent.
[Item 10] The use according to any one of items 1 to 9, wherein the adhesive composition further comprises a plasticizer (D), wherein the plasticizer (D) is a trimellitic acid ester or an alkyl sulfonic acid phenyl ester.
[Item 11] The use according to any one of items 1 to 10, wherein the adhesive composition is moisture curable.
[Item 12] A bonded structure comprising
   glass,
   resin, and
   cured product of the adhesive composition as defined in any one of items 1 to 11 between the glass and the resin,
   wherein at least one of (1) - (3) is met:
      (1) the resin is a polycarbonate-containing resin,
      (2) the glass is a cover glass for a display 14 inches or larger or for a display having a curved surface or curved cross section,
         wherein the resin is a resin panel, and
         wherein the bonded structure is a display,
      (3) the bonded structure is an in-vehicle display.
[Item 13] The bonded structure according to item 12, wherein the resin is a polycarbonate-containing resin.
[Item 14] The bonded structure according to item 12 or 13,
   wherein the glass is a cover glass for a display 14 inches or larger or for a display having a curved surface or curved cross section,
   wherein the resin is a resin panel, and
   wherein the bonded structure is a display.
[Item 15] The bonded structure according to any one of items 12 to 14, wherein the bonded structure is an in-vehicle display.

### [Effects of Invention]

According to the present disclosure, there is provided a use of an adhesive composition having workability and hot/cold thermal shock resistance in combination. The adhesive composition of the present disclosure is excellent in deformation followability and are suitable for bonding dissimilar materials having different coefficients of linear expansion.

### [Description of Embodiment]

### <Adhesive composition>

The adhesive composition of the present disclosure comprises a poly(meth) acrylic polymer (A), having a reactive silyl group, an oxyalkylene polymer (B), having a reactive silyl group at the end, and a silane coupling agent (C).

### [(A) Poly(meth)acrylic polymer having a reactive silyl group]

The adhesive composition of the present disclosure comprises a poly(meth)acrylic polymer (A), having a reactive silyl group. The poly(meth)acrylic polymer (A) has a repeating unit derived from (meth)acrylic monomer ((meth)acrylic acid and derivatives thereof (e.g., esters and amides) and has at least one reactive silyl group.

(Meth)acrylic polymer (A) may have a repeating unit derived from the (meth)acrylic monomer represented by

(a1) Formula: CH₂=CX¹-C(=O)-O-A¹

[In the formula, X¹ is a hydrogen atom or a methyl group, and A¹ is a hydrogen atom or a hydrocarbon group having 1 to 9 carbons].

A¹ in repeating unit (a1) may be a saturated or unsaturated hydrocarbon group, preferably an aliphatic hydrocarbon group, more preferably a saturated aliphatic hydrocarbon group. A¹ may be an aliphatic hydrocarbon group which is a linear, branched or cyclic, preferably linear. The carbon number of A¹ may be 1 to 9, 1 to 8, 1 to 6, or 1 to 5.

Specific examples of repeating unit (a1) include a repeating unit derived from methyl (meth)acrylate, ethyl (meth)acrylate, propyl (meth)acrylate, butyl (meth)acrylate, hexyl (meth)acrylate, and octyl (meth)acrylate. The repeating unit (a1) may be a single repeating unit. The repeating unit (a1) may be one kind or a combination of two or more kinds. The repeating unit (a1) may be a combination of a repeating unit where the carbon number of A¹ is 1 to 3 (e.g. 1 to 2) and a repeating unit where the carbon number of A¹ is 4 to 9 (e.g. 4 to 8). By comprising the repeating unit (a1) where the carbon number of A¹ is 4 to 9, the polymer flexibility can be given, and a cured product with excellent durability can be obtained. By comprising the repeating unit (a1) where the carbon number of A¹ is 1 to 3, the compatibility with other components can be improved, and the effect of improving adhesion and/or strength can be exerted.

(Meth)acrylic polymer (A) may have a repeating unit derived from the (meth)acrylic monomer represented by

(a2) Formula: CH₂=CX²-C(=O)-O-A²

[In the formula, X² is a hydrogen atom or a methyl group, and A² is a hydrocarbon group having 10 to 40 carbons]

A² in repeating unit (a2) is a saturated or unsaturated hydrocarbon group, preferably an aliphatic hydrocarbon group, more preferably a saturated aliphatic hydrocarbon group. X² is preferably a hydrogen atom. A² may be an aliphatic hydrocarbon group, which is linear, branched or cyclic, preferably linear. The carbon number of A² is 10 or more, 12 or more, 14 or more, 16 or more, preferably 12 or more. The carbon number of A² is 40 or less, 30 or less, 25 or less, or 22 or less, and preferably 30 or less. Without wishing to be bound by any particular theory, it is presumed that the use of a repeating unit (a2) where the carbon number of A² is 10 or more localizes the nonpolar portion in the polymer and improves adhesion properties.

Specific examples of repeating unit (a2) include a repeating unit derived from stearyl (meth)acrylate, palmityl (meth)acrylate, docosyl (meth)acrylate, icosyl (meth)acrylate, and lauryl (meth)acrylate. The repeating unit (a2) may be alone or a combination of two or more.

(Meth)acrylic polymer (A) may have a repeating unit derived from other monomer (a3). Examples of other monomers (a3) include styrene monomers such as styrene, vinyltoluene, α-methylstyrene, chlorostyrene, styrenesulfonic acid and its salts; fluorine-containing vinyl monomers such as perfluoroethylene, perfluoropropylene, and vinylidene fluoride; silicon -containing vinyl monomers such as vinyltrimethoxysilane and vinyltriethoxysilane; maleic anhydride, maleic acid, monoalkyl esters and dialkyl esters of maleic acid; fumaric acid, monoalkyl esters and dialkyl esters of fumaric acid; maleimide monomers such as maleimide, methyl maleimide, ethyl maleimide, propyl maleimide, butyl maleimide, hexyl maleimide, octyl maleimide, dodecyl maleimide, stearyl maleimide, phenyl maleimide, and cyclohexyl maleimide; nitrile group-containing vinyl monomers such as acrylonitrile and methacrylonitrile; amide group-containing vinyl monomers such as acrylamide and methacrylamide; vinyl esters such as vinyl acetate, vinyl propionate, vinyl pivalate, vinyl benzoate and vinyl cinnamate; and alkenes such as ethylene and propylene; conjugated dienes such as butadiene and isoprene; vinyl chloride, vinylidene chloride, allyl chloride, and allyl alcohol.

The amount of the repeating unit (a1) in the (meth) acrylic polymer (A) may be 50wt% or more, 60wt% or more, 70wt% or more, 80wt% or more, or 90wt% or more, preferably 60wt% or more. The amount of repeating unit (a1) in the (meth)acrylic polymer (A) may be 95wt% or less, 90wt% or less, 80wt% or less, or 70wt% or less, preferably 90 % or less.

The amount of a repeating unit (a1) where the carbon number of A¹ is 1 to 3 (e.g. 1 to 2) in (meth)acrylic polymer (A) may be 3wt% or more, 4wt% or more, 5wt% or more, or 6wt% or more. The amount of a repeating unit (a1) where the carbon number of A¹ is 1 to 3 (e.g. 1 to 2) in (meth)acrylic polymer (A) may be 20wt% or less , 18wt% or less, 15wt% or less, or 12wt% or less. When the amount of the repeating unit (a1) where the carbon number of A¹ is 1 to 3 is in the above range, the adhesive properties of the adhesive composition can be improved.

The amount of a repeating unit (a1) where the carbon number of A¹ is 4 to 9 (e.g. 4 to 8) in (meth)acrylic polymer (A) may be 30wt% or more, 40wt% or more, 50wt% or more, or 60wt% or more. The amount of a repeating unit (a1) where the carbon number of A¹ is 4 to 9 (e.g. 4 to 8) in (meth)acrylic polymer (A) may be 90wt% or less, 85wt% or less, 80wt% or less, or 75wt% or less. When the amount of the repeating unit (a1) where the carbon number of A¹ is 4 to 9 is in the above range, the flexibility of the polymer can be improved and the durability of the adhesive composition can be improved.

The amount of the repeating unit (a2) in (meth) acrylic polymer (A) may be 2.5wt% or more, 5wt% or more, 7.5wt% or more, 10wt% or more, 12.5wt% or more, or 15wt% or more, preferably, 5wt% or more. The amount of repeating unit (a2) in (meth)acrylic polymer (A) may be 50wt% or less , 40wt% or less, 30wt% or less, 25wt% or less, or 20wt% or less, preferably 40wt% or less. When the amount of repeating unit (A2) is in the above range, the adhesive properties of the adhesive composition can be improved.

### (Reactive silyl group)

In this specification, a reactive silyl group is a group having a silicon atom and a reactive group bonded thereto. This may be any known reactive silyl group. The reactive group may be a hydroxyl group, hydrolyzable group, etc. The hydrolyzable group may be an alkoxy group, an amide group or an aminooxy group, preferably, an alkoxy group. The alkoxy group having fewer carbons can have higher reactivity. The alkoxy group can be selected according to the purpose and application. The carbon number of the alkoxy group may be 1 to 6, preferably 1 to 3, more preferably 1 or 2.

The reactive silyl group may be a group represented by

Formula: -si(R)₃₋ₙ(Y)ₙ

[In the formula, R is a hydrocarbon group having 1 to 30 carbons or an organosiloxy group represented by -OSi(R')₃ wherein R' is a hydrocarbon group having 1 to 30 carbons, Y is a hydroxyl group or hydrolyzable group, n is an integer from 1 to 3. When there are two or more of each of R, R' or Y, they are the same or different].

R may be an alkyl group having 1 to 10 carbons, preferably an alkyl group having 1 to 5 carbons.

Y is preferably a hydrolyzable group.

n is preferably 2 or 3.

(Meth)acrylic polymer (A) can have at least one, preferably two, reactive silyl groups. The average number of reactive silyl group in each (meth)acrylic polymer (A) may be 1.0 or more, 1.2 or more, 1.4 or more, and 1.6 or more. The average number of reactive silyl group in (meth)acrylic polymer (A) may be 3.5 or less, 3.0 or less, 2.5 or less, or 2.0 or less.

In (meth)acrylic polymer (A), the number of reactive silyl group in one molecule can be calculated, for example, based on the concentration of reactive silyl group in (meth)acrylic polymer (A) determined by ¹H-NMR and the number-average molecular weight of (meth)acrylic polymer (A) determined by GPC.

### (Molecular weight of (meth)acrylic polymer (A) etc.)

The number average molecular weight of (meth)acrylic polymer (A) may be 3000 or more, 5000 or more, or 8000 or more. The number average molecular weight of (meth)acrylic polymer (A) may be 50000 or less, 40000 or less, or 30000 or less.

### (Method for producing (meth)acrylic polymer (A))

The method for producing (meth)acrylic polymer (A) is not particularly limited and can refer to known methods. For example, the method comprises polymerizing the above monomers (a1) to (a3) by radical polymerization, and reacting a compound having a reactive silyl group with the functional group present in the resulting polymer to obtain (meth)acrylic polymer (A). The (meth)acrylic polymer (A) may be produced by living radical polymerization. The (meth)acrylic polymer (A) may be a random copolymer or a block copolymer.

The method of introducing reactive silyl group into the polymer is not particularly limited and can be referred to known methods. For example, free radical polymerization or living radical polymerization using a chain transfer agent or initiator having a specific functional group can be selected. It may be Reversible Addition-Fragmentation chain Transfer (RAFT) polymerization, atom Transfer Radical Polymerization (ATRP), and other living radical polymerization methods. The functional groups at both ends of the polymer can be reacted with a compound having reactive silyl groups to introduce it in the ends of the polymer. It can also be introduced into the interior of the (meth)acrylic polymer (A) by copolymerizing a polymerizable monomer having a reactive silyl group. For example, the method described in JP4829107B can be referred to.

### [Oxyalkylene polymer having a reactive silyl group at the end (B)]

The adhesive composition in the present disclosure comprises an oxyalkylene polymer (B) having a reactive silyl group at least one end.

Oxyalkylene polymer (B) may substantially consist of a repeating unit derived from alkylene oxides, except for a reactive silyl group. The alkylene oxides may be, for example, propylene oxide, ethylene oxide, and butylene oxide, preferably propylene oxide and ethylene oxide. The repeating unit derived from the alkylene oxides in oxyalkylene polymer (B) may be alone or in combination of several kinds. Oxyalkylene polymer (B) may have a structure other than the repeating unit derived from an alkylene oxide, such as a repeating unit derived from a phenylene oxide, but the amount of the repeating unit derived from alkylene oxides in oxyalkylene polymer (B) is 80wt% or more, preferably 90wt% or more.

Oxyalkylene polymer (B) may be a branched polymer (glycerin-based or sugar-based, etc.) or a linear polymer, preferably a combination of a branched polymer and a linear polymer. The branched polymers may have three or more reactive silyl group ends (e.g., 3 to 6, 3 to 5, 3 to 4, etc.). The linear chain polymers can have two reactive silyl group ends at the maximum.

The amount of branched polymer in the total of polymer (B) may be 50wt% or more, 60wt% or more, 70wt% or more, 80wt% or more, or 90wt% or more. The amount of branched polymer in the total of polymer (B) may be 99wt% or less, 90wt% or less, 80wt% or less, 70wt% or less, or 60wt% or less.

The amount of linear polymer in the total of polymer (B) may be 3wt% or more, 5wt% or more, 7wt% or more, 10wt% or more, 15wt% or more, or 20wt% or more. The amount of linear polymer in the total of polymer (B) may be 60wt% or less, 50wt% or less, 40wt% or less, or 30wt% or less.

The reactive silyl group in the oxyalkylene polymer (B) is the same as the reactive silyl group in the description of (meth)acrylic polymer (A) in the above.

Oxyalkylene polymer (B) includes a polymer having at least one reactive silyl group end, preferably, 2 to 5 reactive silyl group ends, more preferably 2 or 3 reactive silyl group ends. When comprising a polymer having three or more reactive silyl group ends (branched polymer), adhesion properties can be improved compared to when only comprising a polymer having two reactive silyl group ends (linear polymer). Both a polymer having three or more reactive silyl group ends (e.g., three to four, especially three) and a polymer having two reactive silyl group ends may be included.

The method of introducing silyl groups into the molecule is not particularly limited and may be any known method. For example, it can be introduced by reacting a compound having a reactive silyl group with the functional groups at both ends of the polymer.

### (Molecular weight etc. of oxyalkylene polymer (B))

The number average molecular weight of the whole oxyalkylene polymer (B) may be 1000 or more, 2000 or more, 3000 or more, 5000 or more, 8000 or more, or 10000 or more. The molecular weight of the whole oxyalkylene polymer (B) may be 100000 or less, 50000 or less, 40000 or less, or 30000 or less, 20000 or less, 15000 or less, or 10000 or less. The number average molecular weight of oxyalkylene polymer (B) is calculated in terms of polystyrene.

The number average molecular weight of branched polymers may be 5000 or more, 7500 or more, 10000 or more, 12000 or more, 140000 or more, or 15000 or more. The number average molecular weight of branched polymers may be 100000 or less, 50000 or less, 40000 or less, 30000 or less, or 20000 or less..

The number average molecular weight of linear polymers is 1000 or more, 1500 or more, 2000 or more, 2500 or more, 3000 or more, 3500 or more, 4000 or more, or 4500 or more. The number average molecular weight of linear polymers may be 10000 or less, 9000 or less, 8000 or less, 7000 or less, or 6000 or less.

The ratio of the number average molecular weight of the branched polymer to the number average molecular weight of the linear polymer (number average molecular weight of the branched polymer/number average molecular weight of the linear polymer) may be 1.2 or more, 1.5 or more, 2.0 or more, 2.5 or more, or 3.0 or more. The ratio of the number average molecular weight of the branched polymer to the number average molecular weight of the linear polymer (number average molecular weight of the branched polymer/number average molecular weight of the linear polymer) may be 10 or less, 7.5 or less, 5.0 or less, 4.5 or less, 4.0 or less, 3.5 or less, or 3.0 or less.

As oxyalkylene polymer (B), examples of specific products include MS Polymer S303, SILYL SAT010, etc. manufactured by Kaneka Corporation.

### (Method for producing oxyalkylene polymer (B))

The method for producing oxyalkylene polymer (B) is not particularly limited, and known methods may be referred, for example, the methods described in JP2005-336401A may be referred to. The method for producing the oxyalkylene polymer comprises, for example, the processes of polymerizing alkylene oxide and introducing a reactive silyl group into the molecule. For example, an oxyalkylene polymer (B) can be obtained by polymerizing alkylene oxide and reacting a compound containing a reactive silyl group to functional groups such as hydroxyl groups at both ends of the resulting polymer.

### [Silane coupling agent (C)]

A silane coupling agent is an organosilicon compound having at least two functional groups with different reactivity in one molecule, generally having a reactive silyl group and an organic reactive group. A silane coupling agent may have one reactive silyl group or two or more (e.g., two) reactive silyl groups in the molecule.

Silane coupling agent (C) in the present disclosure may be aromatic or aliphatic and may be a monosilane type coupling agent represented by formula (1) and/or a bisilane type coupling agent represented by formula (2).

### (Monosilane coupling agent)

Silane coupling agent (C) may be a monosilane coupling agent represented by Formula (1):

X-Si-R^{a}ₙ(R^{b})₃₋ₙ (1)

[In the formula, X is a reactive group and
R^{a} is independently a hydrocarbon group, and
R^{b} is independently a reactive group and
n is 0, 1 or 2.]

X is a reactive group that can chemically bond with organic materials. Examples of X include, vinyl group-containing groups, epoxy group-containing groups, secondary amino group-containing groups, primary amino group-containing groups, hydroxy group-containing groups, alkoxy group-containing groups, mercapto group-containing groups, sulfide group-containing groups, halogen group-containing groups, but not limited to these groups. X may be an aliphatic group or an aromatic group, preferably aliphatic groups, especially reactive group-containing alkyl groups. The carbon number of X is 15 or less, 12 or less, 10 or less, 8 or less, 6 or less, or 4 or less, preferably 10 or less. The carbon number of X is 1 or more, 2 or more, 3 or more, 4 or more, or 5 or more, preferably 2 or more.

R^{a} is a hydrocarbon group, e.g., an alkyl group. The carbon number of R^{a} may be 1 or more, 2 or more, 3 or more, 4 or more, or 5 or more. The carbon number of R^{a} is 15 or less, 12 or less, 10 or less, 8 or less, or 6 or less, preferably 10 or less.

R^{b} is a reactive group that can chemically bond to inorganic materials such as glass and metals. R^{b} may be an alkoxy group, (methoxy, ethoxy, propoxy, and butoxy groups). The carbon number of R^{b} may be 1 or more, 2 or more, 3 or more, 4 or more, or 5 or more. The carbon number of R^{b} may be 15 or less, 12 or less, 10 or less, 8 or less, 6 or less, or 4 or less.

n is 0, 1 or 2, preferably 0 or 1.

### (Bissilane type coupling agent)

Silane coupling agent (C) may be a bissilane coupling agent represented by Formula (2)

R^{a'}ₙ(R^{b'})₃₋ₙSi-x'si-R^{a'}ₘ(R^{b'})₃₋ₘ (2)

[In the formula, X' is a reactive group
R^{a'} is independently a hydrocarbon group,
R^{b'} is independently a reactive group and
m is independently 0, 1 or 2].

X' is a reactive group that can chemically bond to organic materials. Examples of X' include vinyl-containing groups, epoxy-containing groups, secondary amino group-containing groups, primary amino group-containing groups, hydroxy group-containing groups, alkoxy group-containing groups, mercapto group-containing groups, sulfide group-containing groups and halogen group-containing groups, but not limited to these groups. X' may be an aliphatic group or an aromatic group, preferably aliphatic groups, especially reactive group-containing alkyl groups. The carbon number of X' is 15 or less, 12 or less, 10 or less, 8 or less, 6 or less, or 4 or less, and preferably 10 or less. The carbon number of X' is 1 or more, 2 or more, 3 or more, 4 or more, or 5 or more, preferably 2 or more.

R^{a'} is a hydrocarbon group, e.g., an alkyl group; the carbon number of R^{a'} may be 1 or more, 2 or more, 3 or more, 4 or more, or 5 or more. The carbon number of R^{a'} may be 15 or less, 12 or less, 10 or less, 8 or less, or 6 or less, and preferably 10 or less.

R^{b'} is a reactive group that can chemically bond to inorganic materials such as glass and metals. R^{b'} may be an alkoxy group, (methoxy, ethoxy, propoxy, and butoxy groups). The carbon number of R^{b'} is 1 or more, 2 or more, 3 or more, 4 or more, or 5 or more. The carbon number of R^{b'} can be 15 or less, 12 or less, 10 or less, 8 or less, 6 or less, or 4 or less.

m is 0, 1 or 2, preferably 0 or 1.

### (Silane coupling agent (C-i))

Silane coupling agent (C) in this disclosure comprises a secondary amino group-containing silane coupling agent (C-i). The secondary amino group refers to the R¹-NH-R² structure, in which two hydrogens of ammonia are replaced with hydrocarbon groups. The nitrogen atom of the secondary amino group is bonded to one or two, preferably two, alkylene groups. The carbon number of each hydrocarbon group (e.g., alkylene group) to which the nitrogen atom of the secondary amino group is bonded may be 8 or less, 6 or less, 4 or less, or 3 or less.

The secondary amino group-containing silane coupling agents (C-i) may have an OH group (hydroxyl groups) or a NH₂ group (amino group). It is noted that the OH group does not include an OH group generated by hydrolysis of alkoxy groups (silanol hydroxy).

Known methods can be used for a method producing a secondary amino group-containing silane coupling agent (C-i) having an OH group. For example, it can be produced by reacting an epoxysilane compound with an aminosilane compound. The primary amino group of the aminosilane compound can react with the epoxy group of the epoxysilane compound to form an OH group. Known methods can be used for a method producing a secondary amino group-containing silane coupling agent (C-i) having NH₂, for example, JP2014-501237A can be referred.

The secondary amino group-containing silane coupling agent (C-i) is preferably a combination of at least two kinds of secondary amino group-containing silane coupling agent (C-i), at least one of which preferably has an OH or NH₂ group. The secondary amino group-containing silane coupling agent (C-i) may comprise both of a silane coupling agent having an OH group in the molecule and a silane coupling agent having an NH₂ group in the molecule.
The secondary amino group-containing silane coupling agent (C-i) may have an OH or NH₂ group in X of formula (1) or in X' of formula (2).

When the secondary amino group-containing silane coupling agent (C-i) has an OH group or NH₂ group, the OH group or NH₂ group is present in the distance within 6, 5, 4, or 3 atoms from the secondary amino group in the molecule. Herein, the distance within n atoms means the range that can be reached by following n bonds from the nitrogen atom of the secondary amino group.

Specific examples of the secondary amino group-containing silane coupling agent (C-i) include N-(n-butyl 3-aminopropyltrimethoxysilane, N-(n-butyl)-3-aminopropyl methyldimethoxysilane, N-ethyl-3-aminopropyltrimethoxysilane, N-ethyl-3-aminopropylmethyldimethoxysilane, N-ethyl aminoisobutyltrimethoxysilane, N-methyl-3-aminopropyltrimethoxysilane, N-methyl-3-aminopropylmethyl dimethoxysilane, N-(2-aminoethyl)-3-aminopropyltrimethoxysilane, bis(trimethoxysilylpropyl)amine, N-phenyl-γ-aminopropylmethyldimethoxysilane, N-phenyl-γ-aminopropyltrimethoxysilane, and N-naphthyl-γ-aminopropylmethyldimethoxysilane.

### (Other silane coupling agent)

Silane coupling agent (C) may comprise, in addition to the above secondary amino group-containing silane coupling agent (C-i), a vinyl group-containing silane coupling agent, an epoxy group-containing silane coupling agent, a primary amino group-containing silane coupling agent, mercapto group-containing silane coupling agent, alkyl halide group-containing silane coupling agent, or polysulfide group-containing silane coupling agent may be included. These may be used alone or in combination, but it is preferred to use two or more in combination, especially preferred to use one or more in addition to the secondary amino group-containing silane coupling agent (C-i). It is especially preferred to include at least one silane coupling agent selected from the group consisting of vinyl group-containing silane coupling agents and epoxy group-containing silane coupling agents. It may comprise at least one selected from vinyl group-containing silane coupling agents and at least one selected from epoxy group-containing silane coupling agents. Adhesion may be improved by using a combination of silane coupling agents.

Examples of vinyl group-containing silane coupling agents include non- (meth) acrylic silane coupling agents such as vinyltrimethoxysilane, vinyltriethoxysilane, vinyltris(2-methoxyethoxy)silane, allyltrichlorosilane, allyltrimethoxysilane, allyltriethoxysilane diethoxymethylvinylsilane, trichlorovinylsilane, and triethoxyvinylsilane; and acrylic silane coupling agents such as (meth)acryloxymethyltrimethoxysilane, (meth)acryloxymethyltriethoxysilane, ((meth)acryloxymethylmethyldimethoxysilane, (meth)acryloxymethyldimethoxysilane, (meth)acryloxymethyldimethoxysilane, γ-(meth)acryloxypropyltrimethoxysilane, γ-(meth)acryloxypropyltriethoxysilane, γ-(meth)acryloxypropylmethyl dimethoxysilane, γ-(meth)acryloxypropyl methyl diethoxysilane, and γ-(meth)acryloxypropyldimethylmethoxysilane.

Examples of epoxy group-containing silane coupling agents include 2-(3,4-epoxycyclohexyl)ethyltrimethoxysilane, 3-glycidoxypropyltrimethoxysilane, and 3-glycidoxypropyltriethoxysilane.

Examples of primary amino group-containing silane coupling agents include 3-aminopropyltriethoxysilane and 3-aminopropyltrimethoxysilane.

Examples of mercapto group-containing silane coupling agents include 3-mercaptopropyltrimethoxysilane and 3-mercaptopropyltriethoxysilane.

Examples of alkyl halide group-containing silane coupling agents include 3-chloropropyltrimethoxysilane and 3-chloropropyltriethoxysilane.

### [Plasticizer (d)]

The curable composition in the present disclosure preferably comprises plasticizers. Examples of the plasticizers include trimellitic acid esters, alkyl sulfonic acid phenyl esters, polyalkylene ethers, phthalic acid diesters, epoxidized hexahydrophthalic acid diesters, alkylenedicarboxylic acid diesters, alkyl benzenes, castor oils, phosphate esters, and epoxidized soybean oils. Among them, trimellitic acid esters or alkyl sulfonic acid phenyl esters can be used to achieve both good workability and good adhesion.

### [Filler (e)]

The curable composition in the present disclosure may comprise fillers. The fillers are solid particles at room temperature and may be any known fillers. Examples of the fillers include surface untreated calcium carbonate, surface treated calcium carbonate (such as fatty acid treated calcium carbonate), fumed silica, precipitable silica, carbon black, talc, mica, clay, glass beads, microballoons, baloons(such as silas balloons, glass balloons, silica balloons, plastic balloons, organic powder-coated plastic balloons), plastic particles, inorganic fibers(such as glass fibers and metal fibers), organic fibers (such as polyethylene fibers and polypropylene fibers), aluminum borate, silicon carbide, silicon nitride, potassium titanate, graphite, needle-like crystalline calcium carbonate, magnesium borate, titanium diboride, needle-like crystalline fillers (such as chrysotile, wollastonite), aluminum flakes, aluminum powder, and iron powder.

Calcium carbonate may be surface-treated calcium carbonate with organic substances such as fatty acids, fatty acid soaps, fatty acid esters, and various surfactants, and/or surface treatment agents such as silane coupling agents, titanate coupling agents, and various other coupling agents, which may be used in combination with untreated heavy calcium carbonate or light calcium carbonate.

### [Other components (F)]

Examples of other components include curing catalysts (e.g., silanol condensation catalysts such as tin catalysts), organic solvents (methanol, ethanol, isopropyl alcohol, butanol, acetone, methyl ethyl ketone, ligroin, ethyl acetate, tetrahydrofuran, n-hexane, heptane, isoparaffin-based high-boiling solvent, etc.), stabilizer (methanol, ethanol, etc. in curable compositions comprising an alkoxysilyl group-containing polymer as the main component), epoxy compounds, acrylic oligomers, antiaging agents (such as hindered phenols, mercaptans, sulfides, dithiocarboxylates, thioureas, thiophosphates, thioaldehydes, etc.), water preservatives (water, hydrates of inorganic salts, etc.), UV absorbers or photostabilizer (benzotriazoles, hindered amines, etc.), antioxidants (hindered phenols, etc.), and thixotropic agents (coloidal silica, organic bentonite, fatty acid amide, hydrogenated castor oil, etc.).

### [Composition of adhesive composition]

In the adhesive composition of the present disclosure, the amount of (meth)acrylic polymer (A) relative to the total of the polymers (A) and (B) may be 30wt% or more, 40wt% or more, 50wt% or more, or 60wt% or more. The amount of (meth)acrylic polymer (A) relative to the total of the polymers (A) and (B) may be 90wt% or less , 80wt% or less, 70wt% or less, 60wt% or less, or 50wt% or less.

In the adhesive composition of the present disclosure, the amount of oxyalkylene polymer (B) relative to the total of the polymers (A) and (B) may be more than 30wt%, more than 40wt% or more, 50wt% or more, or 60wt% or more. The amount of oxyalkylene polymer (B) relative to the total of the polymers (A) and (B) may be 90wt% or less , 80wt% or less, 70wt% or less, 60wt% or less, or 50wt% or less.

In the adhesive composition of the present disclosure, the amount of (meth)acrylic polymer (A) relative to 100 weight parts of the polymer (B) is 50 weight parts or more, 75 weight parts or more, 100 weight parts or more, or 125 weight parts or more. The amount of (meth)acrylic polymer (A) relative to 100 weight parts of the polymer (B) may be 200 weight parts or less, 150 weight parts or less, 100 weight parts or less, or 75 weight parts or less.

The total amount of polymer (A) and (B) in the adhesive composition may be 10wt% or more, 15wt% or more, 20wt% or more, and 25wt% or more. The total amount of polymer (A) and (B) in the adhesive composition may be 60wt% or less, 50wt% or less, 40wt% or less, or 30wt% or less.

The amount of polymer (A) in the adhesive composition may be 10wt% or more, 15wt% or more, or 20wt% or more. The amount of polymer (A) in the adhesive composition may be 50wt% or less, 40wt% or less, 30wt% or less, 25wt% or less, 20wt% or less, or 15wt% or less.

The amount of polymer (B) in the adhesive composition may be 10wt% or more, 15wt% or more, or 20wt% or more. The amount of polymer (B) may be 50wt% or less, 40wt% or less, 30wt% or less, or 25wt% or less, 20wt% or less, or 15wt% or less.

In the adhesive composition, good workability and good adhesive properties can be achieved when the polymer (A) and (B) are present in the amount of the above range.

In the adhesive composition of the present disclosure, the amount of silane coupling agent (C) in the adhesive composition may be adjusted depending on the use, but may be 0.1wt% or more, 0.5wt% or more, 1wt% or more, 1.5wt% or more, 2.0wt% or more, or 2.5wt% or more. The amount of silane coupling agent (C) in the adhesive composition may be 10wt% or less, 7.5wt% or less, 5wt% or less or 3wt% or less.

In the adhesive composition of the present disclosure, the amount of the secondary amino group-containing silane coupling agent (C-i) in the adhesive composition maybe 0.05wt% or more, 0.25wt% or more, 0.5wt% or more, 0.75wt% or more, 1.0%wt% or more, or 1.25%wt% or more. The amount of the secondary amino group-containing silane coupling agent (C-i) in the adhesive composition is 5wt% or less, 4wt% or less, 3wt% or less, or 2wt% or less.

In the adhesive composition of the present disclosure, the amount of silane coupling agent (C) other than the secondary amino group-containing silane coupling agent (C-i) in the adhesive composition may be adjusted depending on the use, but may be 0.05wt% or more, 0.25wt% or more, 0.5wt% or more, 0.75wt% or more, 1.0wt% or more, or 1.25wt% or more. The amount of silane coupling agent (C) other than the secondary amino group-containing silane coupling agent (C-i) in the adhesive composition may be 5wt% or less, 4wt% or less, 3wt% or less, or 2wt% or less.

In the adhesive composition of the present disclosure, the amount of plasticizer (D) in the adhesive composition may be adjusted depending on the use, but may be 1wt% or more, 3wt% or more, or 5wt% or more. The amount of plasticizer (D) in the adhesive composition may be 30wt% or less, 25wt% or less, 20wt% or less or 15wt% or less.

In the adhesive composition of the present disclosure, the amount of filler (E) in the adhesive composition may be adjusted depending on the use, but may be 20wt% or more, 30wt% or more, 40wt% or more, 50wt% or more, or 60wt% or more. The amount of filler (E) in the adhesive composition may be 80wt% or less, 75wt% or less, 70wt% or less or 65wt% or less.

In the adhesive composition of the present disclosure, the amount of other components such as a curing catalyst may be adjusted depending on the purpose and use, for example, appropriately adjusted to be in the rage of 0.01 to 10wt%, or 0.01 to 5wt%.

The curable composition in this disclosure can be used as a one-component type in which the above-mentioned blending components are mixed together in a batch, or as a two-component type having a polymer-containing composition and a curing catalyst-containing curing agent, or even as a three-component type having another toner component consisting of a colorant and plasticizer, etc. The one-component type is preferred from the viewpoint of workability.

### <Bonded structure>

A bonded structure can be obtained by applying the adhesive composition of the present disclosure to the surface of a substrate, laminate the substrate and curing the adhesive composition. Curing of the adhesive composition in the present disclosure is performed by known methods. For example, when the adhesive composition is a moisture-curing one-component type, curing proceeds by moisture in the air.

The type of substrate is not limited, but resin substrate or glass substrate is suitable. It may be adhesion between resin substrates or adhesion between glass substrates. Preferably, the adhesion is between the resin substrate and the glass substrate. The resin substrate may be saturated or unsaturated, aromatic or aliphatic. For example, olefin resins, acrylic resins, polyamide resins, polyimide resins, polycarbonate (PC) resins, polyester resins, polyether resins, styrene resins (e.g., polystyrene resins, ABS resins AS(acrylonitrile-styrene) resins, ASA(acrylonitrile-styrene-acrylate) resins, etc.) and mixtures of these resins (e.g., alloy resins). Among these, from the viewpoint of adhesion, PC resins, ABS resins, and mixtures of these resins are preferably used, ABS resins and PC/ABS alloy resins are more preferably used. The weight ratio of PC/ABS in PC/ABS alloy resins may be 10/90 to 90/10, 20/80 to 80/20, and preferably 30/70 to 70/30.

### <Use>

The adhesive composition of the present disclosure is used for bonding a resin substrate and glass. For example, it is suitably used for bonding a resin substrate (resin panel) in an electronic device to the cover glass of a display. In the case of large displays or displays having curved or curved cross sections, there are problems such as uneven adhesion due to the time required for application. However, since the adhesive composition of the present disclosure is excellent in both application workability and adhesiveness, it can be used for large displays (e.g., 14 inches or more) and displays having curved surfaces or curved cross-sections. Furthermore, the present disclosure is particularly suitable for displays that are placed in harsh environments, such as in-vehicle displays, because of its excellent hot/cold thermal shock resistance.

### [EXAMPLE]

The following examples and comparative examples are provided to further illustrate this disclosure in detail, but this disclosure is not limited by these examples.

### [Test Method]

### (Viscosity)

Viscosity characteristics of the adhesive were measured with a rotational viscometer and rheometer.

Rotational viscosity was measured using a BS-type rotational viscometer with spindle No. 7 at a spindle rotation speed of 10 rpm at 20°C. The rotational viscosity may be 500 to 700 Pa·s. If the viscosity less than 500 Pa·s, dripping or spreading of the applied adhesive may occur. If the viscosity is more than 700 Pa·s, variations in the shape of the coating and nozzle clogging may occur.

Rheometer viscosity is measured with a rotational rheometer (AR-G2, TA instruments) at a shear rate of 200 (1/s) with a gap-to-gap distance of 200 µm at 25°C. The rheometer viscosity may be 20 to 40 Pa·s.

### (Application workability)

Application workability was evaluated with a dispenser (2HD035G3 manufactured by HEISHIN Ltd).

Fine application ability was evaluated by dispensing using a nozzle with an inner diameter of 1.5 mm or less. It is preferred to dispense without clogging using a nozzle with an inner diameter of 1.5 mm, preferably with an inner diameter of 1.25 mm.

High-speed application ability was evaluated by dispensing with a nozzle having an inner diameter of 1.25 mm at a dispensing machine travel speed of 150 mm/s. The dispensed bead shape was evaluated based on the following criteria.
○: The bead shape is stable. There is no break, lack of height, or spreading.
△ : The bead shape is not stable, but there is no obvious break, lack of height, or spreading, and there is no practical problem.
×: There are a break, lack of height, and spreading.

### (Hot/cold thermal shock resistance)

The adhesive was applied on the periphery of PC • ABS resin (200 mm × 300 mm), which is surface-treated with a plasma processor. a glass plate of the same size was overlapped, and cured it for three days at 23°C and 50wt% RH to obtain specimens. The thickness of the adhesive was adjusted by placing a spacer of 0.4 to 0.8 mm thick between the PC • ABS resin. Plasma treatment was performed using ultra-high-density atmospheric pressure plasma generator, Tough Plasma FPF-20, manufactured by FUJI MACHINERY so that the wetting index (dyne number) of the PC • ABS resin surface was adjusted to 50 mN/m or higher with a wetting index reagent.

Hot/cold thermal shock resistance was evaluated by placing the specimen in a hot/cold thermal shock tester (TSA-203ES, manufactured ESPEC) and repeating 100 cycles of hot/cold thermal shock, where one cycle includes a low temperature side at -30°C [holding time 30 minutes] and a high temperature side at 85°C [holding time 30 minutes], or one cycle includes a low temperature side at -40°C [holding time 30 minutes] and high temperature side at 95°C [holding time 30 minutes].
○: No peeling between adhesive and PC • ABS resin or glass after 100 cycles
△ : No peeling between adhesive and PC • ABS resin or glass after 50 cycles
× : peeling between adhesive and PC • ABS resin or glass after 50 cycles

### [Raw materials]

The chemical structures, etc. of the raw materials used in the tests are shown in Table 1. The (meth)acrylic polymers A2 and A3 and the silane coupling agent C4 were produced by the following method.

### [Synthesis Example 1: Production of (meth)acrylic polymer A2]

In 42 g of toluene heated to 105°C, 14.5 g of methyl methacrylate, 68.5 g of butyl acrylate, 15 g of stearyl methacrylate, 2 g of 3-methacryloxypropyldimethoxymethylsilane and a solution prepared by dissolving 0.48 g of 2,2'-azo bisisobutyronitrile in 18.7 g of toluene as a polymerization initiator were added dropwise over 5 hours, and then the mixture was stirred for 2 hours. Further, added a solution of 0.02 g of 2,2'-azobisisobutyronitrile in 6.3 g of toluene and stirred for 1 hour to obtain a (meth) acrylic polymer containing a dimethoxymethylsilyl group where the solid content concentration is 60wt% and the number average molecular weight is 19000 (polystyrene equivalent value obtained from GPC). The obtained polymer was devolatile (110°C, reduced pressure) with an evaporator to obtain a transparent and viscous liquid (A2) having 99% or more of a solid content.

### [Synthesis Example 2: Production of (meth)acrylic polymer A3]

In 33 g of isobutanol heated to 105°C, a mixture consisting of 98 g of butyl acrylate, 2 g of 3-methacryloxypropyldimethoxymethylsilane and 17 g of isobutanol, where 0.6 g of 2,2'-azo bisisobutyronitrile was dissolved, was added dropwise over 4 hours, and then polymerized after 2 hours to obtain a (meth) acrylic polymer containing a dimethoxymethylsilyl group where the solid content concentration is 60wt% and the number average molecular weight is 11700 (polystyrene equivalent value obtained from GPC). The obtained polymer was devolatile (110°C, reduced pressure) with an evaporator to obtain a transparent and viscous liquid (A3) having 99% or more of a solid content

### [Synthesis Example 3: Production of Silane Coupling Agent C4]

50 g of 3-glycidoxypropyltrimethoxysilane and 100 g of N-(2-aminoethyl)-3-aminopropyltrimethoxysilane were heat-mixed at 50°C for 72 hours to synthesize the product.

### [Examples 1 to 15 and Comparative Examples 1 to 5]

A curable composition was prepared by mixing raw materials with a planetary mixer at the compositions (weight parts) shown in Table 2. The above tests were conducted on the obtained curable compositions, and the evaluation results obtained are shown in Table 3.

**[Table 1]**

| | | Chemical Structure, etc. | Product Name, etc. |
|---|---|---|---|
| | A1 | Mixture of silyl group-containing poly(meth) acrylate polymer and silyl group-end polyoxyalkylene polymer | SILYL MA440(Kaneka) |
| | A2 | Copolymer of methyl methacrylate (MMA), butyl acrylate (BA), and stearyl acrylate (StA)MMA14.5wt%/BA68.5wt%/StA15wt% | Synthesis Example 1 |
| | | Number average molecular weight:19000 | |
| | | Number of reactive silyl group: 1 to 2 (average 1.8) | |
| (Meth)acrylic polymer | | Reactive silyl group structure: dimethoxysilyl | |
| | A3 | Polymer composed mainly of butyl acrylate (BA) | Synthesis Example 2 |
| | | BA: about 100wt% | |
| | | Number average molecular weight:11,700 | |
| | | Number of reactive silyl group:1 to 2 (average 1.8) | |
| | | Reactive silyl group structure: dimethoxysilyl | |
| Oxyalkylene polymer | B1 | Branched oxyalkylene polymer having a main chain of polyoxypropylene and a molecular end of methyldimethoxy reactive silyl group | MS Polymer S303 (Kaneka) |
| | | Number average molecular weight:16000 | |
| | B2 | Linear oxyalkylene polymer having a main chain of polyoxypropylene and molecular both ends of dialkoxy silyl group | SILYL SAT010 (Kaneka) |
| | | Number average molecular weight:5000 | |
| | C1 | Vinyl trimethoxysilane | KBM-1003 |
| | | CH₂-CH-Si(OCH₃)₃ | (Shin-Etsu Chemical) |
| | C2 | 3-Glycidoxypropyltrimethoxysilane | KBM-403 |
| | | (CH₂OCH)CH₂O(CH₂)₃Si(OCH₃)**3** | (Shin-Etsu Chemical) |
| | C3 | N-(2-aminoethyl)-3-aminopropyltrimethoxysilane | KBM-603 |
| Silane coupling agent | | H₂NCH₂CH₂NH(CH₂)₃Si(OCH₃)**3** | (Shin-Etsu Chemical) |
| | C4 | Silane coupling compound with the following structure | Synthesis Example 3 |
| | | (CH₃O)₃SiC₃H₆0CH₂CH(OH)CH₂NHC₂H₄NHC₃H₆Si(OCH₃)₃ | |
| | C5 | Bis(3-trimethoxysilylpropyl)amine | Dynasylan 1124 (Evonik Japan) |
| | | (CH₃O)₃Si (CH₂)₃NH(CH₂)₃Si(OCH₃)₃ | |
| Plasticizer | D1 | Trimellitic acid tri-2-ethylhexyl | MONOCIZER-W-700 (DIC) |
| | D2 | Alkyl sulfonic acid phenyl esters | Mesamoll (LANXESS) |
| Filler | E1 | Heavy calcium carbonate, Average particle size:1.05um | SOFTON 2200 (Shiraishi Calcium) |
| | E2 | Surface-treated calcium carbonate, Average particle size:0.08µm | Biscolite OS (Shiraishi Calcium) |
| Tin catalyst | F1 | Dibutyl tin Diacetylacetonate | U220H (Nittokasei) |
| Additive | F2 | Antioxidant | AO60P (ADEKA) |
| Coloring agent | F3 | Carbon black | HI-BLACK20 (Korea Carbonblack) |

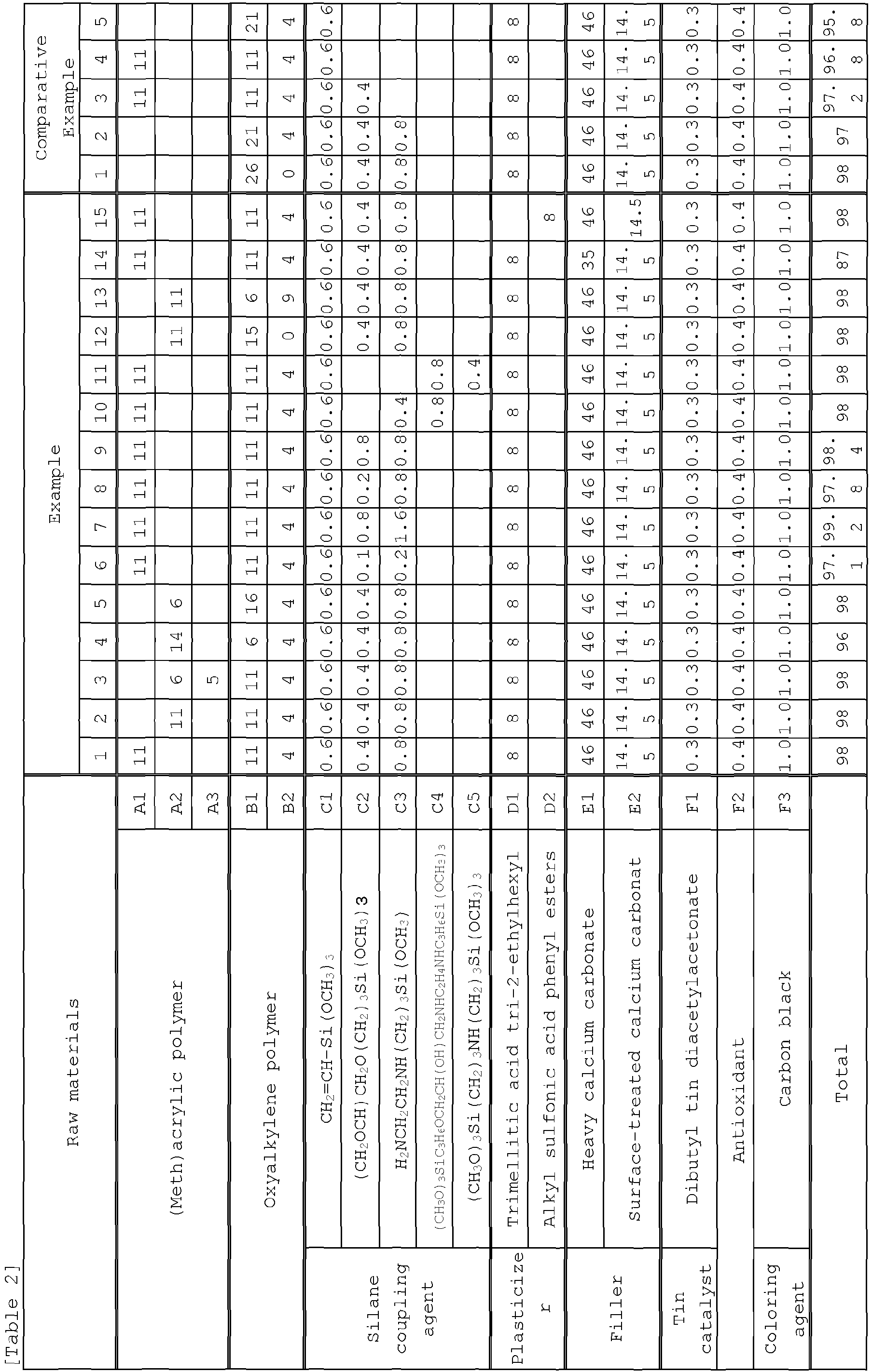

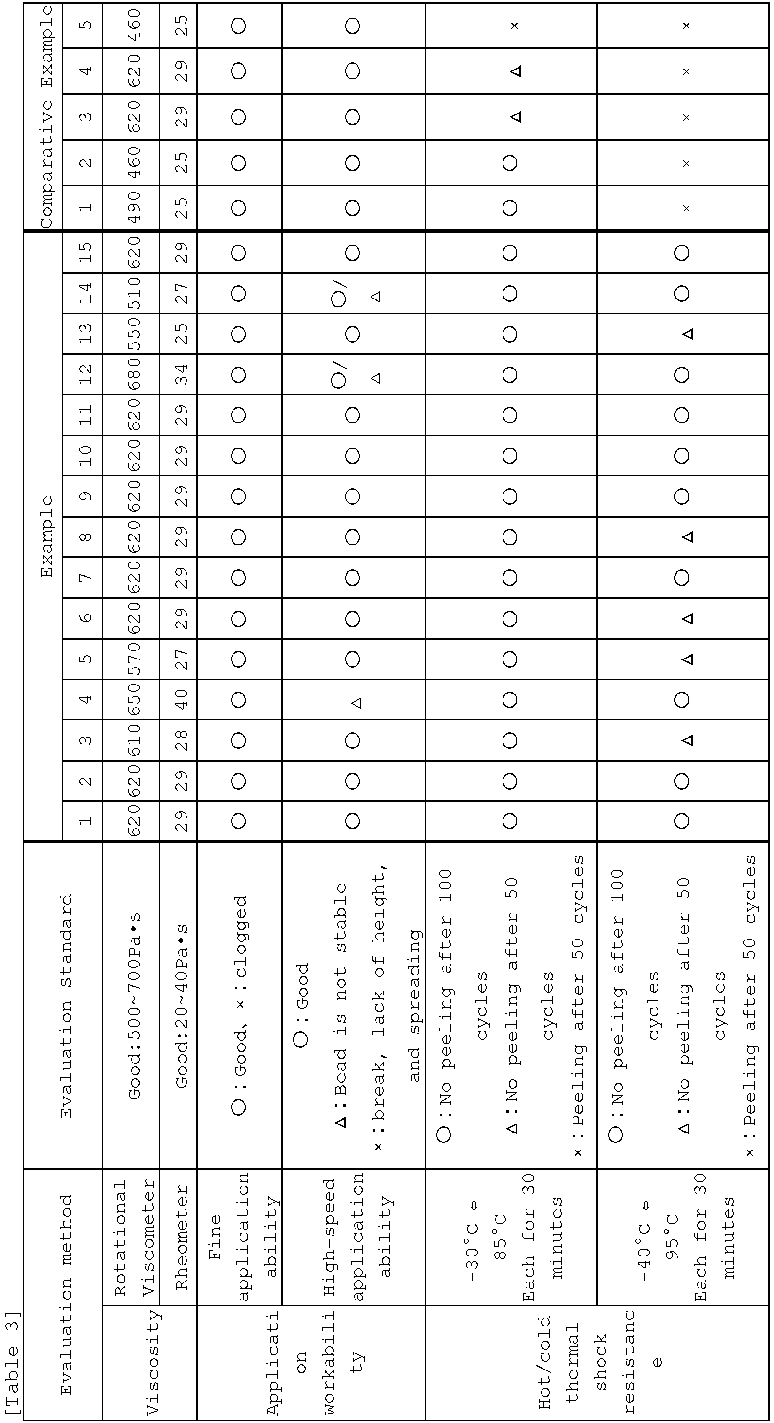

## Claims

1. Use of an adhesive composition for preparing a bonded structure,
wherein the bonded structure comprises
glass,
resin, and
a cured product of the adhesive composition between the glass and the resin, wherein the adhesive composition comprises
a poly(meth)acrylic polymer (A), having a reactive silyl group,
an oxyalkylene polymer (B), having a reactive silyl group at the end, and
a silane coupling agent (C),
wherein the silane coupling agent (C) comprises a secondary amino group-containing silane coupling agent (C-i);
wherein at least one of (1) - (3) is met:
(1) the resin is a polycarbonate-containing resin,
(2) the glass is a cover glass for a display 14 inches or larger or for a display having a curved surface or curved cross section, wherein the resin is a resin panel, wherein the bonded structure is a display,
(3) the bonded structure is an in-vehicle display.

2. The use according to claim 1,
wherein the polymer (A) has
a repeating unit derived from a (meth)acrylic monomer represented by
(a1) Formula: CH₂=CX¹-C(=O)-O-A¹
[In the formula, X¹ is a hydrogen atom or a methyl group, and
A¹ is a hydrogen atom or a hydrocarbon group having 1 to 9 carbons], and
a repeating unit derived from a (meth)acrylic monomer represented by
(a2) Formula: CH₂=CX²-C(=O)-O-A²
[In the formula, X² is a hydrogen atom or a methyl group, and
A² is a hydrocarbon group having 10 to 40 carbons].

3. The use according to claim 1 or 2,
wherein the polymer (B) is a combination of a branched polymer and a linear polymer,
wherein the number average molecular weight of the linear polymer, as determined according to the description, is 1000 to 10000, and
wherein the amount of the linear polymer is from 3 to 50wt% in the total of polymer (B).

4. The use according to any one of claims 1 to 3,
wherein the secondary amino group-containing silane coupling agent (C-i) has an OH group or a NH₂ group.

5. The use according to claim 4,
wherein the secondary amino group-containing silane coupling agent (C-i) has an OH group or a NH₂ group within a distance of 6 atoms from the secondary amino group in the molecule.

6. The use according to any one of claims 1 to 5,
wherein the secondary amino group-containing silane coupling agent (C-i) is a combination of at least two kinds of the secondary amino group-containing silane coupling agent (C-i), at least one of which has an OH group or an NH₂ group.

7. The use according to claim 6,
wherein the secondary amino group-containing silane coupling agent (C-i) comprises both a silane coupling agent having an OH group in the molecule and a silane coupling agent having an NH₂ group in the molecule.

8. The use according to any one of claims 1 to 7,
wherein at least one of the secondary amino group-containing silane coupling agent (C-i) has two or more reactive silyl groups in the molecule.

9. The use according to any one of claims 1 to 8,
wherein the silane coupling agent (C) further comprises at least one selected from the group consisting of a vinyl group-containing silane coupling agent and an epoxy group-containing silane coupling agent.

10. The use according to any one of claims 1 to 9, wherein the adhesive composition further comprises a plasticizer (D), wherein the plasticizer (D) is a trimellitic acid ester or an alkyl sulfonic acid phenyl ester.

11. The use according to any one of claims 1 to 10, wherein the adhesive composition is moisture curable.

12. A bonded structure comprising
glass,
resin, and
cured product of the adhesive composition defined in any one of claims 1 to 11 between the glass and the resin,
wherein at least one of (1) - (3) is met:
(1) the resin is a polycarbonate-containing resin,
(2) the glass is a cover glass for a display 14 inches or larger or for a display having a curved surface or curved cross section, wherein the resin is a resin panel, wherein the bonded structure is a display,
(3) the bonded structure is an in-vehicle display.

13. The bonded structure according to claim 12, wherein the resin is a polycarbonate-containing resin.

14. The bonded structure according to claim 12 or 13,
wherein the glass is a cover glass for a display 14 inches or larger or for a display having a curved surface or curved cross section,
wherein the resin is a resin panel, and
wherein the bonded structure is a display.

15. The bonded structure according to any one of claims 12 to 14, wherein the bonded structure is an in-vehicle display.

## Patentansprüche

1. Verwendung einer Klebstoffzusammensetzung zur Herstellung einer verbundenen Struktur,
wobei die verbundene Struktur umfasst
Glas,
Harz, und
ein gehärtetes Produkt der Klebstoffzusammensetzung zwischen dem Glas und dem Harz,
wobei die Klebstoffzusammensetzung umfasst
ein Poly(meth)acrylpolymer (A), das eine reaktive Silylgruppe aufweist,
ein Oxyalkylenpolymer (B), das am Ende eine reaktive Silylgruppe aufweist, und ein Silan-Kupplungsmittel (C),
wobei das Silan-Kupplungsmittel (C) ein sekundäre Aminogruppe enthaltendes Silan-Kupplungsmittel (C-i) umfasst;
wobei mindestens einer aus (1) - (3) erfüllt ist:
(1) das Harz ist ein Polycarbonat enthaltendes Harz,
(2) das Glas ist ein Deckglas für ein Display von 14 Zoll oder größer oder für ein Display mit einer gekrümmten Oberfläche oder einem gekrümmten Querschnitt, wobei das Harz eine Harzplatte ist, wobei die verbundene Struktur ein Display ist,
(3) die verbundene Struktur ein Display in einem Fahrzeug ist.

2. Verwendung nach Anspruch 1,
wobei das Polymer (A) aufweist
eine Wiederholungseinheit, abgeleitet von einem (Meth)acrylmonomer, dargestellt durch
(a1) Formel: CH₂=CX¹-C(=O)-O-A¹
[In der Formel ist X¹ ein Wasserstoffatom oder eine Methylgruppe, und
A¹ ist ein Wasserstoffatom oder eine Kohlenwasserstoffgruppe mit 1 bis 9 Kohlenstoffen], und
eine Wiederholungseinheit, abgeleitet von einem (Meth)acrylmonomer, dargestellt durch
(a2) Formel: CH₂=CX²-C(=O)-O-A²
[In der Formel ist X² ein Wasserstoffatom oder eine Methylgruppe, und
A² ist eine Kohlenwasserstoffgruppe mit 10 bis 40 Kohlenstoffen].

3. Verwendung nach Anspruch 1 oder 2,
wobei das Polymer (B) eine Kombination aus einem verzweigten Polymer und einem linearen Polymer ist,
wobei das zahlengemittelte Molekulargewicht des linearen Polymers, wie gemäß der Beschreibung bestimmt, 1000 bis 10000 ist, und
wobei die Menge des linearen Polymers 3 bis 50 Gew.-% der Gesamtmenge des Polymers (B) ist.

4. Verwendung nach einem der Ansprüche 1 bis 3,
wobei das sekundäre Aminogruppe enthaltende Silan-Kupplungsmittel (C-i) eine OH-Gruppe oder eine NH₂-Gruppe aufweist.

5. Verwendung nach Anspruch 4,
wobei das sekundäre Aminogruppe enthaltende Silan-Kupplungsmittel (C-i) eine OH-Gruppe oder eine NH₂-Gruppe innerhalb eines Abstandes von 6 Atomen von der sekundären Aminogruppe im Molekül aufweist.

6. Verwendung nach einem der Ansprüche 1 bis 5,
wobei das sekundäre Aminogruppe enthaltende Silan-Kupplungsmittel (C-i) eine Kombination von mindestens zwei Arten des sekundären Aminogruppe enthaltenden Silan-Kupplungsmittel (C-i) ist, von denen mindestens eine eine OH-Gruppe oder eine NH₂-Gruppe aufweist.

7. Verwendung nach Anspruch 6,
wobei das sekundäre Aminogruppe enthaltende Silan-Kupplungsmittel (C-i) sowohl ein Silan-Kupplungsmittel mit einer OH-Gruppe im Molekül als auch ein Silan-Kupplungsmittel mit einer NH₂-Gruppe im Molekül umfasst.

8. Verwendung nach einem der Ansprüche 1 bis 7,
wobei mindestens eines des sekundäre Aminogruppe enthaltenden Silan-Kupplungsmittel (C-i) zwei oder mehr reaktive Silylgruppen im Molekül aufweist.

9. Verwendung nach einem der Ansprüche 1 bis 8,
wobei das Silan-Kupplungsmittel (C) ferner mindestens eines umfasst, das aus der Gruppe ausgewählt ist, die aus einem Vinylgruppe enthaltendem Silan-Kupplungsmittel und einem Epoxygruppe enthaltendem Silan-Kupplungsmittel besteht.

10. Verwendung nach einem der Ansprüche 1 bis 9, wobei die Klebstoffzusammensetzung ferner einen Weichmacher (D) umfasst, wobei der Weichmacher (D) ein Trimellitsäureester oder ein Alkylsulfonsäurephenylester ist.

11. Verwendung nach einem der Ansprüche 1 bis 10, wobei die Klebstoffzusammensetzung feuchtigkeitshärtbar ist.

12. Verbundene Struktur, umfassend
Glas,
Harz und
gehärtetes Produkt der Klebstoffzusammensetzung nach einem der Ansprüche 1 bis 11 zwischen dem Glas und dem Harz,
wobei mindestens einer aus (1) - (3) erfüllt ist:
(1) das Harz ist ein Polycarbonat enthaltendes Harz,
(2) das Glas ist ein Deckglas für ein Display von 14 Zoll oder größer oder für ein Display mit einer gekrümmten Oberfläche oder einem gekrümmten Querschnitt, wobei das Harz eine Harzplatte ist, wobei die verbundene Struktur ein Display ist,
(3) die verbundene Struktur ein Display in einem Fahrzeug ist.

13. Verbundene Struktur nach Anspruch 12, wobei das Harz ein Polycarbonat enthaltendes Harz ist.

14. Verbundene Struktur nach Anspruch 12 oder 13,
wobei das Glas ein Deckglas für ein Display von 14 Zoll oder mehr oder für ein Display mit einer gekrümmten Oberfläche oder einem gekrümmten Querschnitt ist,
wobei das Harz eine Harzplatte ist, und
wobei die verbundene Struktur ein Display ist.

15. Verbundene Struktur nach einem der Ansprüche 12 bis 14, wobei die verbundene Struktur ein Display in einem Fahrzeug ist.

## Revendications

1. Utilisation d'une composition adhésive pour préparer une structure collée, dans laquelle la structure collée comprend
du verre,
de la résine, et
un produit durci de la composition adhésive entre le verre et la résine,
dans laquelle la composition adhésive comprend
un polymère poly(méth)acrylique (A), ayant un groupe silyle réactif,
un polymère d'oxyalkylène (B), ayant un groupe silyle réactif à l'extrémité, et
un agent de couplage silane (C),
dans laquelle l'agent de couplage silane (C) comprend un agent de couplage silane contenant un groupe amino secondaire (C-i) ;
dans laquelle au moins un des critères (1) à (3) est satisfait :
(1) la résine est une résine contenant du polycarbonate,
(2) le verre est un verre de couverture pour un écran de 14 pouces ou plus ou pour un écran ayant une surface incurvée ou une section transversale incurvée, dans laquelle la résine est un panneau de résine, dans laquelle la structure collée est un écran,
(3) la structure collée est un écran en véhicule.

2. Utilisation selon la revendication 1,
dans laquelle le polymère (A) a
une unité de répétition dérivée d'un monomère (méth)acrylique représenté par
(a1) formule : CH₂=CX¹-C(=O)-O-A¹
[dans la formule, X¹ est un atome d'hydrogène ou un groupe méthyle, et
A¹ est un atome d'hydrogène ou un groupe d'hydrocarbures ayant de 1 à 9 carbones], et
une unité de répétition dérivée d'un monomère (méth)acrylique représenté par
(a2) formule : CH₂=CX²-C(=O)-O-A²
[dans la formule, X² est un atome d'hydrogène ou un groupe méthyle, et
A² est un groupe d'hydrocarbures ayant de 10 à 40 carbones].

3. Utilisation selon la revendication 1 ou 2,
dans laquelle le polymère (B) est une combinaison d'un polymère ramifié et d'un polymère linéaire,
dans laquelle le poids moléculaire moyen en nombre du polymère linéaire, tel que déterminé selon la description, est de 1 000 à 10 000, et
dans laquelle la quantité de polymère linéaire est de 3 à 50 % en poids du total du polymère (B).

4. Utilisation selon l'une quelconque des revendications 1 à 3,
dans laquelle l'agent de couplage silane contenant un groupe amino secondaire (C-i) a un groupe OH ou un groupe NH₂.

5. Utilisation selon la revendication 4,
dans laquelle l'agent de couplage silane contenant un groupe amino secondaire (C-i) a un groupe OH ou un groupe NH₂ à une distance de 6 atomes du groupe amino secondaire dans la molécule.

6. Utilisation selon l'une quelconque des revendications 1 à 5,
dans laquelle l'agent de couplage silane contenant un groupe amino secondaire (C-i) est une combinaison d'au moins deux types d'agent de couplage silane contenant un groupe amino secondaire (C-i), dont au moins un a un groupe OH ou un groupe NH₂.

7. Utilisation selon la revendication 6,
dans laquelle l'agent de couplage silane contenant un groupe amino secondaire (C-i) comprend à la fois un agent de couplage silane ayant un groupe OH dans la molécule et un agent de couplage silane ayant un groupe NH₂ dans la molécule.

8. Utilisation selon l'une quelconque des revendications 1 à 7,
dans laquelle au moins un de l'agent de couplage silane contenant un groupe amino secondaire (C-i) a deux groupes silyle réactifs ou plus dans la molécule.

9. Utilisation selon l'une quelconque des revendications 1 à 8,
dans laquelle l'agent de couplage silane (C) comprend en outre au moins l'un choisi dans le groupe constitué par un agent de couplage silane contenant un groupe vinyle et un agent de couplage silane contenant un groupe époxy.

10. Utilisation selon l'une quelconque des revendications 1 à 9, dans laquelle la composition adhésive comprend en outre un plastifiant (D), dans laquelle le plastifiant (D) est un ester d'acide trimellitique ou un ester phénylique d'acide alkyl sulfonique.

11. Utilisation selon l'une quelconque des revendications 1 à 10, dans laquelle la composition adhésive est durcissable à l'humidité.

12. Structure collée comprenant
du verre,
de la résine, et
un produit durci de la composition adhésive définie dans l'une quelconque des revendications 1 à 11 entre le verre et la résine,
dans laquelle au moins un des critères (1) à (3) est satisfait :
(1) la résine est une résine contenant du polycarbonate,
(2) le verre est un verre de couverture pour un écran de 14 pouces ou plus ou pour un écran ayant une surface incurvée ou une section transversale incurvée, dans laquelle la résine est un panneau de résine, dans laquelle la structure collée est un écran,
(3) la structure collée est un écran en véhicule.

13. Structure collée selon la revendication 12, dans laquelle la résine est une résine contenant du polycarbonate.

14. Structure collée selon la revendication 12 ou 13,
dans laquelle le verre est un verre de couverture pour un écran de 14 pouces ou plus ou pour un écran ayant une surface incurvée ou une section transversale incurvée,
dans laquelle la résine est un panneau de résine, et
dans laquelle la structure collée est un écran.

15. Structure collée selon l'une quelconque des revendications 12 à 14, dans laquelle la structure collée est un écran en véhicule.
